# EUROPEAN PATENT SPECIFICATION

(11) **EP 3 065 605 B1**
(45) Date of publication and mention of the grant of the patent: **07.03.2018**
(21) Application number: 14809710.8
(22) Date of filing: 03.11.2014
(51) Int. Cl.: A47J 31/44, A47J 31/46, B67D 1/14

(54) **HOT FLUID DISPENSER FOR MACHINES FOR BEVERAGES**
AUSGABEVORRICHTUNG FÜR HEISSE FLÜSSIGKEIT IN EINEM GETRÄNKEAUTOMATEN
DISTRIBUTEUR DE FLUIDE CHAUD POUR MACHINES DISTRIBUTRICES DE BOISSONS

(30) Priority: 04.11.2013 IT MI20131826
(43) Date of publication of application: 14.09.2016
(73) Proprietor: TOF S.r.l., 28017 S. Maurizio D'Opaglio (NO) (IT)
(72) Inventor: ANTONELLO, Mucci, 28017 San Maurizio d'Opaglio (NO) (IT)
(74) Representative: Fisauli, Beatrice A. M.
(86) International application number: PCT/IB2014/065762
(87) International publication number: WO 2015/063742

(56) References cited:
- DE-A1-102008 047 747
- US-A- 3 211 416
- US-A1- 2011 005 640
- US-B1- 6 457 614

## Description

The present invention relates to a hot water or steam dispenser for preparing hot and/or frothy beverages. In particular, according to the invention, the dispenser can be mounted on machines for preparing hot and/or frothy beverages such as espresso coffee machines, for example to produce frothed hot milk for preparing cappuccino or the like.

The present invention also relates to a machine for preparing hot and/or frothy beverages on which one or more of the aforesaid dispensers are installed.

Coffee machines, especially for professional use, are generally characterized by the possibility of dispensing, as well as coffee, also hot water or steam through one or more variously structured and controlled dispensing devices.

Among these, the most widely used are devices controlled by means of a knob to be rotated or by means of a lever. The document US 3 211 416 A discloses a dispenser for water with a lever. The invention relates in particular to this latter type of dispensing devices.

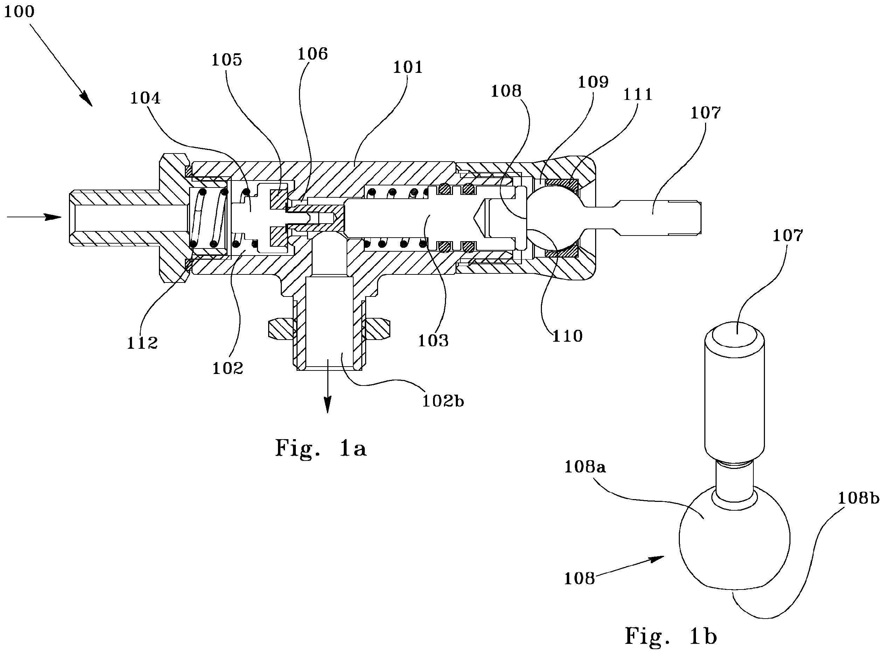

The accompanying Fig. 1a shows an example of a lever-operated water or steam dispenser, according to the prior art.

This dispenser, indicated as a whole with 100, comprises an outer casing 101 that defines, internally, a steam pipe 102 adapted for the passage of steam generated in an external source, not shown in the figure.

The pipe 102 can be closed or opened by translating a slider 103, which is housed slidingly inside the casing 101 and controls translation of a piston 104 on which there is mounted a gasket 105 that blocks or frees a nozzle or hole 106 produced inside the casing and from which the steam traveling along the outlet section 102b of the pipe 102 is delivered.

Axial translation of the slider 103 is controlled by a lever 107 provided at one end of a substantially spherical head 108 (more clearly visible in Fig. 1b) housed in a seat 109 of the casing 102.

On the opposite side to the lever 107, the head 108 has a flat surface 108b that remains in contact with a flat positioning surface 110 of the slider 103, when the dispenser is in closed position.

A guide bushing 111 allows free rotation of the head 108 in the seat 109, so that the lever 107 can be thrust in any direction to dispense hot water or steam.

The flat surface 108b is in fact placed at a distance from the center C of the ball less than the radius of the spherical portion 108a so that, when the head 108 is rotated, said spherical surface 108a comes into contact with the positioning surface 110 of the slider 103 causing it to move back against the action of elastic means 112. The slider 103 in turn thrusts the piston 104 away from the edge of the nozzle 106 to allow hot water or steam to be dispensed from pipe 102b.

Generally, the seat 109 is provided with a stop edge 113 structured to allow a limited rotation of the lever 107, but sufficient to permit it to remain in a stable open position of the dispenser.

However, some applications require the dispenser to be configured so that the lever reaches the stable open position only when thrust or rotated along a predefined plane (e.g. vertical). Otherwise, if rotated in another direction, the lever must still be able to open the steam passage, but must return automatically and promptly to the closed position after being released by the operator.

In general, in prior art dispensers, this condition is reached by designing the end part of the outer casing, where the slider is housed, so as to guide the lever along said predefined plane.

This means that the two different types of dispensers, one with the lever free to rotate through 360° and one with the "directional" lever, even if produced by the same manufacturer, have at least the outer casing and the lever with the related head, purpose designed and built. Moreover, often the slider also has a different shape and size to adapt to that of the head of the lever.

These characteristics of prior art dispensers thus configured cause some problems.

A first problem relates to the production costs of these devices. The production of casings of different shape in fact requires the creation of dedicated molds (in general the rough casing is obtained through casting or molding) and special machining operations to obtain the desired appearance. Added to these costs are those linked to the warehouse management of several parts and other secondary cost items.

Another problem, dependent on the first, is the fact that these devices are cannot be reconfigured to convert them from one type of operation to the other, as the cost to replace the necessary parts would almost exceed the cost of a finished and assembled device. A user wishing to pass from the type with free lever to the type with direction lever, or vice versa, would be obliged to replace the whole dispenser with another with different operating mode.

Besides the cost of purchasing a new device, it would also be necessary to sustain the cost for a skilled technician to remove it and install the new one.

In this context, the object of the present invention is to provide a hot water or steam dispenser, in particular for coffee machines, that solves the aforesaid problems of the prior art.

In particular, an object of the present invention is to provide a hot water or steam dispenser of the type with directional lever that can, if required, be transformed into a dispenser of the type with free lever.

More in detail, the object of the present invention is provide a hot water or steam dispenser of the type with directional lever that can share the majority of parts with a dispenser of the type with free lever.

Another object of the present invention is to produce a hot water or steam dispenser of the type with directional lever that is simple to produce, sturdy and reliable.

The aforesaid objects are achieved by the hot water or steam dispenser of the present invention, which comprises:
- a casing in which a steam pipe is produced to place a steam source in fluid communication with a supply,
- closing means adapted to open and close said steam pipe with at least one translational movement, respectively permitting and preventing the passage of steam through said pipe, and
- a control head housed in a seat of the casing, which can rotate at least along a first plane.

Said closing means are structured to guide rotation of the control head at least along said first plane. According to the invention, the closing means comprise at least one slider housed slidingly in the casing. On one end of the slider there is produced a positioning surface on which the control head rests. Translation of the slider causes shift of a piston that permits or prevents passage of the fluid (hot water or steam) in the steam pipe. According to the invention, there is produced on said positioning surface a notch in which said control head is at least partly received. Said notch is arranged parallel to the first plane.

The control head can therefore rotate in the notch along the first plane to reach a stable open position of the dispenser. During this movement the control head is guided by the notch from the closed position toward the open position. Said stable open position is defined hereinafter as "first open position".

In the first open position water or steam can be dispensed without the operator continuing to operate the control means of the dispenser. According to the invention, the control head can also rotate in the notch along a further plane, transverse to the first plane, to reach a temporary open position. Said temporary open position is defined hereinafter as "second open position". Said second plane is preferably perpendicular to the first.

In the second open position steam or water can be dispensed only when the operator continues to operate the control means of the dispenser.

In a preferred variant, the notch defines two lateral walls and at least one bottom wall. The lateral walls of the notch are preferably parallel or substantially parallel to each other.

In one aspect of the invention, the control head has a disk-shaped form, the circular surface of which is interrupted by a portion with a different curvature, preferably minor, more preferably linear. Just as any disk-shaped form, there are two lateral faces. Preferably, the lateral faces are substantially flat and parallel to the lateral walls of the notch.

In another aspect of the invention, the perimeter of the control head defines a substantially flat stop surface that contacts the bottom of the notch when the dispenser is in closed position.

In a preferred variant, the width of the notch is substantially the same as the thickness of the control head so that the lateral walls can maintain the control head parallel to the first plane during rotation.

Preferably, the width of the notch is between 15% and 60% of the diameter of the slider. The width of the stop surface is preferably between 40% and 80% of the diameter of the control head.

In a further aspect of the invention, the casing of the dispenser is provided with guide means adapted to maintain the slider in a given angular position with respect thereto. In practice, the guide means prevent the slider from rotating inside the casing.

Further characteristics and advantages of the present invention will become more apparent from the description of an example of a preferred, but not exclusive, embodiment of a hot water or steam dispenser, as illustrated in the accompanying drawings, wherein:

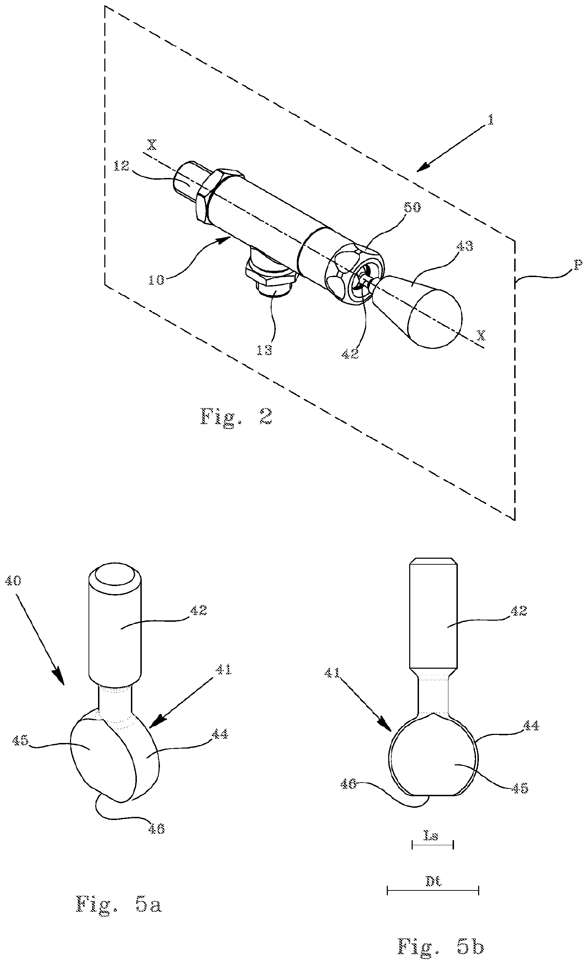

- Fig. 2 is a perspective view of the hot water or steam dispenser according to the invention;
- Figs. 3a and 3b are two sectional views along a vertical plane of the dispenser of Fig. 1, respectively in closed position and in open position according to a first mode;
- Figs. 4a and 4b are two sectional views along a horizontal plane of the dispenser of Fig. 1, respectively in closed position and in open position according to another mode;
- Figs. 5a and 5b are respectively a perspective view and a front view of the lever of the dispenser according to the invention;

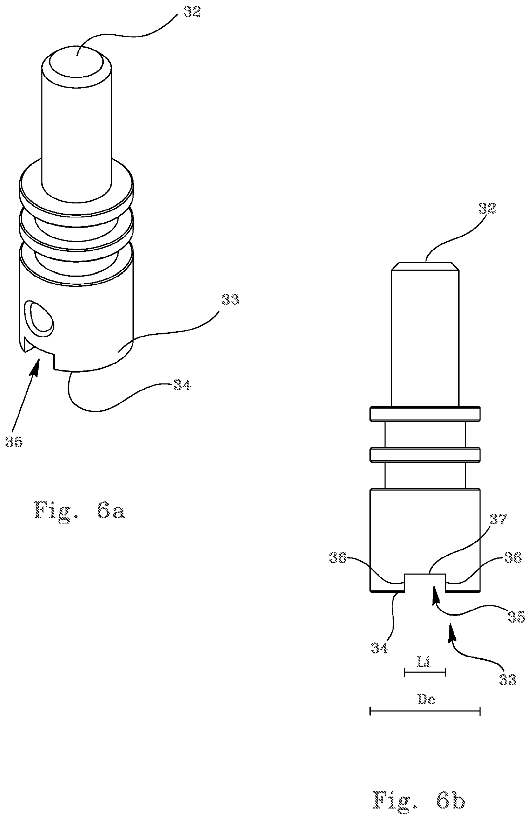

- Figs. 6a and 6b are respectively a perspective view and a front view of the slider of the dispenser according to the invention.

With reference to the accompanying figures, the number 1 indicates as a whole a hot water or steam dispenser applicable, for example, to espresso coffee machines, or more in general, to machines for preparing hot and/or frothy beverages.

The dispenser comprises an outer casing 10 inside which there is produced a pipe 11. This pipe 11 places a steam source, such as a boiler or the like (not illustrated) in fluid communication with a supply, such as a steam wand of an espresso coffee machine or other devices (not illustrated) for preparing hot or frothy beverages.

Closing means, indicated as a whole with 20, control the passage of steam from the source toward the supply.

In the example of embodiment illustrated, the pipe 11 extends from a steam inlet 12 along a first section 11a substantially axial with respect to the casing 10, and along a second section 11b substantially radial, toward a steam outlet 13.

Between the first section 11a and the second section 11b of the pipe 11 there is defined a nozzle 14 that can be blocked or freed by the closing means 20, respectively to prevent or permit the passage of steam from the inlet 12 toward the outlet 13 through the pipe 11.

Said closing means 20 comprise at least one piston 21, housed slidingly in the pipe 11. More in detail, said piston 21 is housed in the first section 11a of the pipe 11. Said piston is movable toward or away from said nozzle 14.

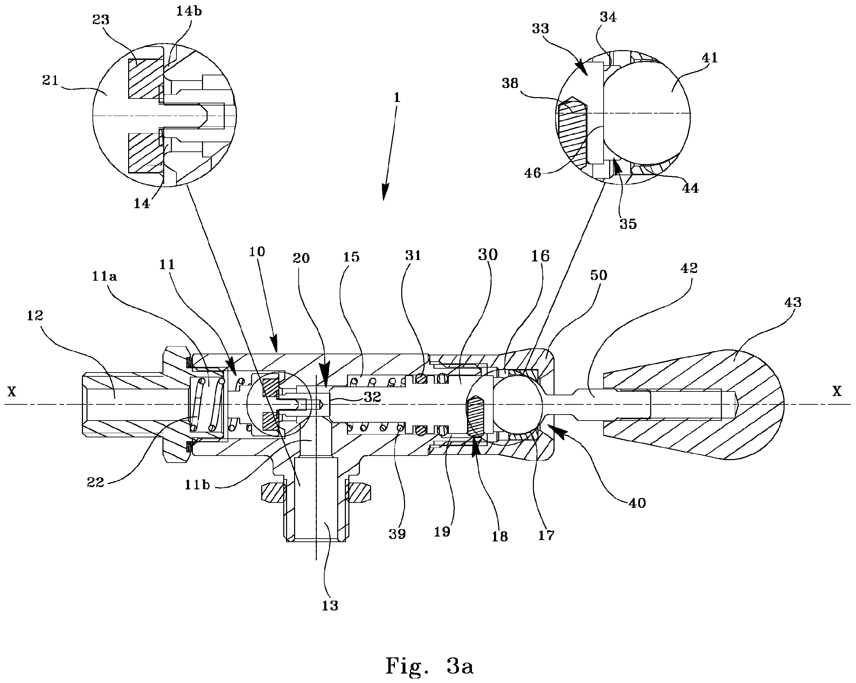

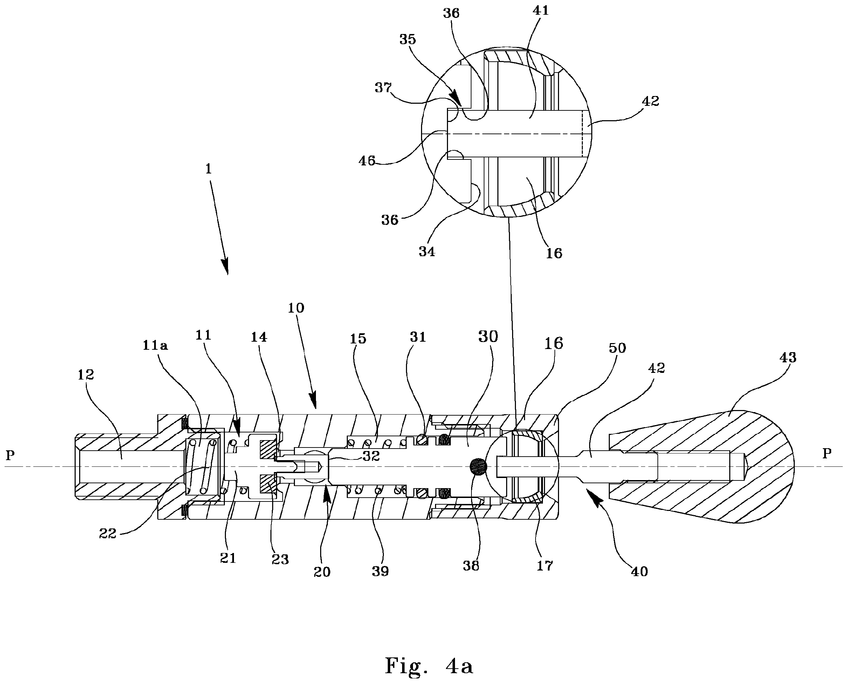

First elastic means 22, such as a coil spring or the like, are arranged in the first section 11a of the pipe and exert on the piston 21 a thrust that maintains it, in the absence of other forces acting thereon, in a closed position in contact with an edge 14b of the nozzle 14 (Figs. 3a, 4a.) Preferably, a gasket 23 is placed on the head of the piston 21 to ensure the seal on the edge 14b of said nozzle 14.

Moreover, a cavity 15 is defined inside the casing 10. A slider, indicated as a whole with 30, is housed slidingly inside this cavity.

Preferably, the cavity 15 and the slider 30 have a cylindrical section so as to allow housing of annular gaskets 31. Said gaskets prevent undesirable leakage of water or steam from the casing 10.

According to the invention, the cavity 15 extends as a continuation of the first section 11a of the pipe 11.

In this way, a first end 32 of the slider 30 acts, directly or indirectly, on the piston 21. A movement of the slider along an opening direction A causes translation of the piston away from the nozzle 14.

Translation of the slider 30 can be controlled, preferably, through manual control means indicated as a whole with 40.

More in detail, said means comprise a control head 41 connected integrally with a lever 42 that can be operated by an operator to dispense water or steam. This lever can optionally be provided with a handle 43 to facilitate the grip thereon, which can be made of a plastic material to thermally isolate it with respect to the hot parts of the dispenser.

The control head 41 is housed in a seat 16 produced in the casing 10. The head is also placed close to a positioning face 34 located at the second end 33 of the slider 30.

The movement of the control head 41 inside the seat 16 can cause translation of the slider 30 in the opening direction A and consequently move the piston 21 away from the edge of the nozzle 14 to allow hot water or steam to be dispensed.

According to the invention, said positioning face 34 is structured to at least partly receive the control head 41 so as to guide the movement thereof at least along a first predefined plane P.

According to a preferred variant, said positioning surface 34 is provided with notch 35 that defines two lateral walls 36. Said walls are preferably substantially parallel to the first plane P. The control head 41 is housed at least partly in the notch 35 between said lateral walls 36.

Compatibly, the control head 41 has a disk-shaped form with a perimeter 44 and two lateral faces 45. Said lateral faces 45 are preferably substantially flat and parallel to the lateral walls 36. In closed position, i.e. in a position in which water or steam is not dispensed, said lateral faces 45 are close to the lateral walls 36 of the notch 35.

A guide bushing 17 is positioned inside the seat 16. This bushing allows the control head 41 to rotate about a rotation axis R1 resting, with its perimeter 44, on the bottom 37 of the notch 35.

The width Li of the notch 35 is substantially the same as the thickness St of the control head 41. In this way, during rotation, this latter is maintained parallel to the first plane P by the lateral walls 36.

More in detail, the width Li of the notch is between 15% and 60% of the diameter Dc of the slider 30.

As mentioned above, the perimeter 44 of the control head 41 is not totally circular, but, in a section, defines a stop surface 46, preferably flat.

Said stop surface 46, is positioned on the opposite side with respect to that of the lever 42. This surface is positioned at a lesser distance from the rotation axis R1 than that of the other points of the circular perimeter 44.

This means that when the stop surface 46 contacts the bottom 37 of the notch 35, the slider 30 is in the furthest back position that allows the first elastic means 22 to thrust the piston 21 against the edge 14b of the nozzle 14 to prevent the passage of water or steam (Figs. 3a, 4a.)

According to a preferred variant the width Ls of the stop surface, in the direction parallel to the plane P, is between 40% and 80% of the diameter Dt of the control head 41.

To dispense water or steam, according to a first opening mode, the operator must operate the lever 42 rotating it on the first plane P. By doing this the control head 41, which also rotates on the same plane, by means of the perimeter 44 exerts a gradual thrust on the positioning face 34 of the slider 30, causing it to advance in the opening direction A.

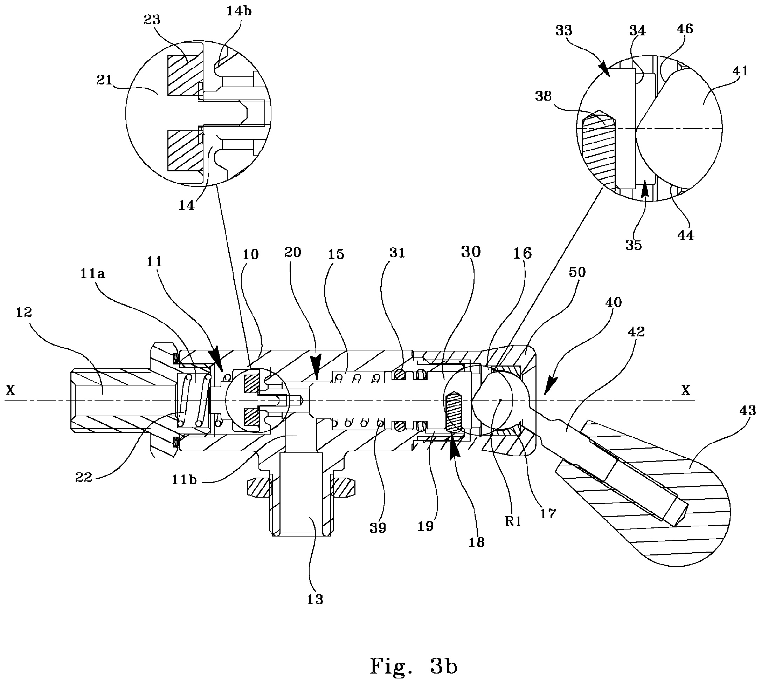

The slider 30, resting with the end 32 on the piston 21, in turn thrusts this latter in the opening direction A, moving it away from the nozzle 14 to allow the passage of steam in the pipe 11 toward the outlet 13 (Fig. 3b).

According to the invention, the profile of the perimeter 44 is structured so that after reaching a given angle a, the lever 42, with the control head 41 connected thereto, remains stably open without requiring the operator hold it in position.

In particular, when the perimeter 44 is in contact with the positioning face 34, their point of contact C lies on the axis X of the slider 30 so that there is no moment that tends to rotate the control head 41 from the open position to the closed position.

From this stable open position, to interrupt dispensing of water or steam the operator must return the lever 42 to the closed position.

Second elastic means 39 are housed in the cavity 15 of the casing 10. These latter act on the slider 30 to ensure return to the closed position contacting the stop surface 46 of the control head 41.

With this first opening mode, the operator can dispense a certain amount of hot water or steam without having to hold the lever 42 in open position. This allows the operator, having both hands free, to move away from the supply.

According to the invention, the dispenser also allows water or steam to be dispensed according to a second opening mode.

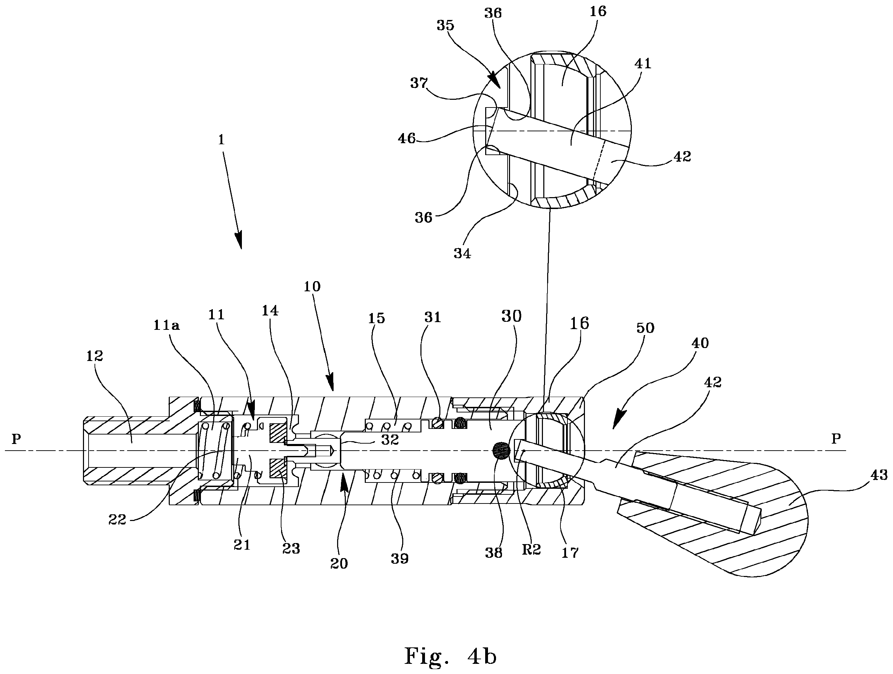

In detail, the lever 42 is moved along a further plane that is transverse, for example perpendicular, to the aforesaid first plane P. This movement causes a rotation of the control head 41 about another rotation axis R2. During rotation, the edges 47 of the stop surface 46 exert a pressure on the lateral walls 36 of the notch 35. This pressure thrusts the slider 30 in the opening direction A. In turn, said slider 30 moves the piston 21 away from the nozzle 14 (Fig. 4b).

However, in this case the lever 42 does not reach a stable open position. Once the lever has been released, the second elastic means 39 exert a thrust in the opposite direction to the opening direction A. Said thrust causes the slider 30 to move back autonomously. This mechanism allows the piston 21 to close the nozzle 14 automatically.

This opening mode is useful, for example, to dispense small amounts of water or steam, or in any case when the operator is able to remain in the vicinity of the supply during the whole of the dispensing operation.

According to a preferred variant, the casing 10 is also provided with guide means 18 adapted to maintain the slider 30 in a given angular position with respect thereto. This is useful to maintain the notch 35 and the control head 41 aligned with each other at all times.

In an embodiment, said guide means 18 can comprise a slot 19. The slot, which is typically produced on the inner surface of the cavity 15, can house a projection 38 of the slider 30, such as a pin or key, sliding along the slot 19.

As mentioned above, the dispenser of the present invention can be converted easily into a dispenser of the free lever type, i.e. the lever can be thrust or rotated in any direction (through 360°) to release the nozzle 14 and allow water and steam to be dispensed.

To obtain this, it is sufficient to replace the control head 41 with another control head having a substantially spherical shape and replace the slider 30 with a slider provided with a flat positioning surface (such as those illustrated in Fig. 1).

Due to the structure of the dispenser according to the invention, replacement of these components is very simple and can be performed with the dispenser device mounted on the machine.

In particular, it is sufficient to perform the following operations in the given order: unscrew the ring nut 50 that closes the front of the seat 16 of the casing 10, remove the control head 41 and withdraw the slider 30 from the cavity 15.

By performing the aforesaid operations in reverse order it is instead possible to insert another slider and another control head compatible with a different operating mode.

The limited cost of these components and the ease of installation thus make conversion of the dispenser particularly advantageous with respect to replacement of the whole device, as occurs in prior art devices.

Moreover, due to the fact of being able to use the same casing for both types of operation, it is possible to significantly reduce the cost of these devices.

The present invention, as described and illustrated, may be subject to various modifications and variants, all of which fall within the scope of the inventive concept, as defined by the appended claims; furthermore, all the details may be replaced with other technically equivalent elements.

## Claims

1. Hot water or steam dispenser, comprising a casing (10) in which a steam pipe (11) is produced to place a steam source in fluid communication with a supply, closing means (20) adapted to open and close said steam pipe with at least one translational movement, respectively permitting and preventing the passage of steam through said pipe, a control head (41) housed in a seat (16) of the casing, which can rotate at least along a first plane (P), **characterized in that** said closing means (20) comprise one slider (30), slidingly housed in the casing (10), provided at one end (33) with a positioning surface (34) on which the control head (41) rests, on said positioning surface (34) being produced a notch (35), parallel to the first plane (P), in which said control head (41) is at least partly received, said closing means (20) being structured to guide rotation of the control head (41) along said first plane (P) to reach a first stable open position of the dispenser, said closing means (20) being structured to allow also that rotation of the control head (41) in the notch (35) along a second plane, transverse to the first plane, to reach a second temporary open position.

2. Hot water or steam dispenser according to claim 1, **characterized in that** said notch (35) defines two lateral walls (36) and at least one bottom wall (37).

3. Hot water or steam dispenser according to claim 1, **characterized in that** the two lateral walls (36) of the notch are substantially parallel to each other.

4. Hot water or steam dispenser according to any one of the preceding claims, **characterized in that** the control head (41) has a disk-shaped form, the circular surface of which is interrupted by a portion with a different curvature.

5. Hot water or steam dispenser according to claim 4, **characterized in that** the perimeter (44) of the control head (41), in one section, defines a substantially flat stop surface (46) adapted to contact the bottom wall (37) of the notch (35) in a closed position of the dispenser.

6. Hot water or steam dispenser according to any one of claims 2 to 5, **characterized in that** the width (Li) of the notch (35) is substantially the same as the thickness (St) of the control head (41), so that during rotation this latter is maintained parallel to the plane (P) by means of the lateral walls (36).

7. Hot water or steam dispenser according to any one of the preceding claims 6, **characterized in that** the width (Li) of the notch (35) is between 15% and 60% of the diameter (Dc) of the slider (30).

8. Hot water or steam dispenser according to any one of claims 5 to 7, **characterized in that** the width (Ls) of the stop surface (46) is between 40% and 80% of the diameter (Dt) of the control head (41).

9. Hot water or steam dispenser according to any one of the preceding claims, **characterized in that** the casing (10) is provided with guide means (18) adapted to maintain the slider (30) in a given angular position with respect thereto.

10. Machine for preparing hot and/or frothy beverages provided with a hot water or steam dispenser according to any one of the preceding claims.

## Patentansprüche

1. Ausgabevorrichtung für heißes Wasser oder Dampf, umfassend ein Gehäuse (10), in dem eine Dampfleitung (11) gefertigt ist, um eine Dampfquelle zu legen in Fluidverbindung mit einer Versorgung, Schließvorrichtungen (20), geeignet, um besagte Dampfleitung mit mindestens einer translatorischen Verschiebung öffnen und schließen zu können, die den Durchgang des Dampfes durch besagte Leitung erlaubt, bzw. verhindert, einem Steuerkopf (41), untergebracht in einem Sitz (16) des Gehäuses, der zumindest längs einer ersten Ebene (P) rotieren kann, **gekennzeichnet dadurch, dass** besagte Schließmittel (20) einen Schieber (30) umfassen, der gleitend in dem Gehäuse (10) untergebracht ist, versehen an einem Ende (33) mit einer Lagerfläche (34), auf der der Steuerkopf (41) ruht, wobei auf der besagten Lagerfläche (34) eine Einkerbung (35) gefertigt ist, parallel zur ersten Ebene (P), in die besagter Steuerkopf (41) zumindest teilweise aufgenommen wird, wobei besagte Schließvorrichtungen (20) so strukturiert sind, dass sie die Rotation des Steuerkopfes (41) längs der besagten ersten Ebene (P) lenken, um eine erste stabile offene Lage der Ausgabevorrichtung zu erreichen, wobei besagte Schließvorrichtungen (20) so strukturiert sind, auch die Rotation des Steuerkopfes (41) in der Einkerbung (35) längs einer zweiten Ebene, querlaufend zur ersten Ebene, zu erlauben, um eine zweite temporäre Lage zu erreichen.

2. Ausgabevorrichtung für heißes Wasser oder Dampf gemäß Anspruch 1, **gekennzeichnet dadurch, dass** besagte Einkerbung (35) zwei seitliche Wände (36) und zumindest eine untere Wand (37) definieren.

3. Ausgabevorrichtung für heißes Wasser oder Dampf gemäß Anspruch 1, **gekennzeichnet dadurch, dass** die beiden seitlichen Wände (36) der Einkerbung im Wesentlichen parallel zueinander verlaufen.

4. Ausgabevorrichtung für heißes Wasser oder Dampf gemäß einem jeglichen der vorhergehenden Ansprüche, **gekennzeichnet dadurch, dass** der Steuerkopf (41) eine scheibenförmige Form aufweist, deren kreisförmige Oberfläche durch einen Teil mit unterschiedlicher Krümmung unterbrochen wird.

5. Ausgabevorrichtung für heißes Wasser oder Dampf gemäß Anspruch 4, **gekennzeichnet dadurch, dass** der Umfang (44) des Steuerkopfes (41), in einem Abschnitt, im Wesentlichen eine ebene Anschlagfläche (46) definiert, geeignet die untere Wand (37) der Einkerbung (35) in einer geschlossenen Lage der Ausgabevorrichtung zu berühren.

6. Ausgabevorrichtung für heißes Wasser oder Dampf gemäß einem jeglichen der Ansprüche 2 bis 5, **gekennzeichnet dadurch, dass** die Breite (Li) der Einkerbung (35) im Wesentlichen dieselbe ist wie die Dicke (St) des Steuerkopfes (41), so dass dieser letztere mittels der seitlichen Wände (36) parallel zur Ebene (P) gehalten wird.

7. Ausgabevorrichtung für heißes Wasser oder Dampf gemäß einem jeglichen der vorhergehenden Ansprüche, **gekennzeichnet dadurch, dass** die Breite (Li) der Einkerbung (35) zwischen 15% und 60% des Durchmessers (Dc) des Schiebers (30) beträgt.

8. Ausgabevorrichtung für heißes Wasser oder Dampf gemäß einem jeglichen der Ansprüche 5 bis 7, **gekennzeichnet dadurch, dass** die Breite (Ls) der Anschlagfläche (46) zwischen 40% und 80% des Durchmessers (Dt) des Steuerkopfes (41) beträgt.

9. Ausgabevorrichtung für heißes Wasser oder Dampf gemäß einem jeglichen der vorhergehenden Ansprüche, **gekennzeichnet dadurch, dass** das Gehäuse (10) mit Führungsvorrichtungen (18) versehen ist, geeignet den Schieber (30) in einer gegebenen Winkelstellung in Bezug auf dieses zu halten.

10. Maschine zur Vorbereitung von heißen und/oder schäumenden Getränken, versehen mit einer Ausgabevorrichtung für heißes Wasser oder Dampf gemäß einem jeglichen der vorhergehenden Ansprüche.

## Revendications

1. Distributeur d'eau chaude ou de vapeur, comprenant un boîtier (10) dans lequel un tuyau de vapeur (11) est réalisé pour placer une source de vapeur en communication fluide avec une alimentation, des moyens de fermeture (20) prévus pour ouvrir et fermer ledit tuyau de vapeur avec au moins un mouvement de translation, permettant et empêchant respectivement le passage de la vapeur à travers ledit tuyau, une tête de commande (41) logée dans un siège (16) du boîtier, qui peut pivoter au moins le long d'un premier plan (P), **caractérisé par le fait que** ledits moyens de fermeture (20) comprennent un curseur (30), logement de manière coulissante dans le boîtier (10), doté à une extrémité (33) d'une surface de positionnement (34) sur laquelle la tête de commande (41) repose, sur ladite surface de positionnement (34) étant produite une encoche (35), parallèle au premier plan (P), dans laquelle ladite tête de commande (41) est au moins partiellement reçue, lesdits moyens de fermeture (20) étant structurés pour guider la rotation de la tête de commande (41) le long dudit premier plan (P) pour atteindre une première position ouverte stable du distributeur, lesdits moyens de fermeture (20) étant structurés pour permettre également cette rotation de la tête de commande (41) dans l'encoche (35) le long d'un second plan, transversal au premier plan, pour atteindre une seconde position ouverte temporaire.

2. Distributeur d'eau chaude ou de vapeur selon la revendication 1, **caractérisé par le fait que** ladite encoche (35) définit deux parois latérales (36) et au moins une paroi de fond (37).

3. Distributeur d'eau chaude ou de vapeur selon la revendication 1, **caractérisé par le fait que** les deux parois latérales (36) de l'encoche sont substantiellement parallèles entre elles.

4. Distributeur d'eau chaude ou de vapeur selon l'une des revendications précédentes, **caractérisé par le fait que** la tête de commande (41) a une forme de disque, dont la surface circulaire est interrompue par une portion avec une courbure différente.

5. Distributeur d'eau chaude ou de vapeur selon la revendication 4, **caractérisé par le fait que** le périmètre (44) de la tête de commande (41), dans une section, définit une surface d'arrêt substantiellement plane (46) adaptée au contact avec la paroi de fond (37) de l'encoche (35) dans une position fermée du distributeur.

6. Distributeur d'eau chaude ou de vapeur selon l'une des revendications de 2 à 5, **caractérisé par le fait que** la largeur (Li) de l'encoche (35) est substantiellement la même que l'épaisseur (St) de la tête de commande (41), de sorte que durant la rotation cette dernière est maintenue parallèle au plan (P) au moyen des parois latérales (36).

7. Distributeur d'eau chaude ou de vapeur selon l'une des revendications précédentes, **caractérisé par le fait que** la largeur (Li) de l'encoche (35) est comprise entre 15 % et 60 % du diamètre (Dc) du curseur (30).

8. Distributeur d'eau chaude ou de vapeur selon l'une des revendications de 5 à 7, **caractérisé par le fait que** la largeur (Ls) de la surface supérieure (46) est comprise entre 40 % et 80 % du diamètre (Dt) de la tête de commande (41).

9. Distributeur d'eau chaude ou de vapeur selon l'une des revendications précédentes, **caractérisé par le fait que** le boîtier (10) est doté de moyens de guidage (18) prévus pour maintenir le curseur (30) dans une position angulaire donnée par rapport à celui-ci.

10. Machine pour préparer des boissons chaudes et/ou mousseuses dotée d'un distributeur d'eau chaude ou de vapeur selon l'une des revendications précédentes.
